# EUROPEAN PATENT SPECIFICATION

(11) **EP 4 613 155 B1**
(45) Date of publication and mention of the grant of the patent: **28.01.2026**
(21) Application number: 25162061.3
(22) Date of filing: 06.03.2025
(51) Int. Cl.: A47J 42/04, A47J 42/08

(54) **HAND-HELD GRINDER**
HANDMÜHLE
MEULEUSE PORTATIVE

(30) Priority: 07.03.2024 CN 202420440071 U; 30.09.2024 CN 202422397994 U
(43) Date of publication of application: 10.09.2025
(73) Proprietor: Ningbo Chefshere Kitchen Technology Co., Ltd., Ningbo 315000 (CN)
(72) Inventor: ZHANG, Guoping, Ningbo, 315000 (CN)
(74) Representative: Bayramoglu et al.

(56) References cited:
- US-A- 5 176 329
- US-A1- 2005 211 806
- US-B2- 8 444 074

## Description

### TECHNICAL FIELD

The present application relates to the technical field of grinders, and in particular to a hand-held grinder.

### BACKGROUND TECHNOLOGY

With social progress and development, an increasing number of households are incorporating grinders into their kitchenware to grind seasonings such as Sichuan pepper, pepper and salt, to enrich the taste of food. For most grinders in the prior art, a gear is provided at the bottom of the grinder and adjusted by placing the grinder upside down. In this way, the operation is inconvenient, and the adjustment is cumbersome for the limited bottom space.

US 5176329A discloses a condiment grinder including a grinding mechanism with an adjustment shaft extending therefrom and mounting both a positioning ring for rotational driving of the shaft and an adjustment nut for longitudinal adjustment of the shaft and the coarseness of the grind. A single knob engages the positioning ring and adjustment nut for simultaneous rotational driving of the positioning ring and nut, and for independent rotation of the adjustment nut to effect control of the operation of the grinder with a single knob.

US 2005/211806A1 discloses a condiment grinder, which has a body for containing condiment seeds, and a condiment grinding mechanism provided at a lower open end of the body through which condiment seeds, ground by the mechanism, may be dispensed. The grinding mechanism has a female grinder and a male grinder rotatable in the female grinder for grinding condiment seeds in an annular gap between the grinders. The condiment grinder includes a base attached to the lower body end for standing the body on a surface. The base engages the female grinder and is turnable to adjust the female grinder's axial position relative to the male grinder and, hence, the width of the gap and, in turns, the ground condiment size. The base has a peripheral wall that is exposed to and accessible from all lateral sides for gripping so that the base can conveniently be turned.

### CONTENT

An objective of the present application is to provide a hand-held grinder. The present application can adjust the grind fineness conveniently.

Technical solutions of the present application are as follows: A hand-held grinder includes a cartridge with an inner cavity, where an adjusting ring is provided on the cartridge; the adjusting ring is sleeved on the cartridge; the adjusting ring is threadedly connected to the cartridge; a mounting sleeve and a grinding assembly are provided in the cartridge; the grinding assembly includes an outer grinding head and an inner grinding head; the outer grinding head is fixedly connected to the cartridge; the inner grinding head is connected to a top cover through a connecting rod; the connecting rod extends through the mounting sleeve; at least one first connecting plate is provided between the mounting sleeve and the cartridge; two ends of the first connecting plate are respectively connected to an outer wall of the mounting sleeve and an inner wall of the cartridge; the connecting rod is connected to the inner grinding head; and the adjusting ring is configured to drive the connecting rod to move up, thereby adjusting a height difference between the outer grinding head and the inner grinding head.

Compared with the prior art, the present application has the following advantages: With the design of the adjusting ring, the present application can adjust the height difference between the outer grinding head and the inner grinding head by rotating the adjusting ring, thereby adjusting the grind fineness, and achieving convenient and smooth operation.

In some embodiments of the present application, the top cover is provided at a top of the cartridge; the top cover can rotate relative to the cartridge; the adjusting ring is located between the cartridge and the top cover; and the inner grinding head is connected to the top cover through the connecting rod.

In some embodiments of the present application, a positioning groove is formed in an inner wall of the adjusting ring; the positioning groove is arranged around a center of the adjusting ring in an array; and a positioning piece cooperating with the positioning groove is provided on an outer wall of the cartridge.

In some embodiments of the present application, a locating ring is provided at a center of the adjusting ring; at least one second connecting plate is provided between the locating ring and the cartridge; two ends of the second connecting plate are respectively connected to an outer wall of the locating ring and an inner wall of the adjusting ring; and the connecting rod extends through the locating ring.

Further, a first mounting groove is formed in the locating ring; a first bearing is provided on the first mounting groove; an inner end and an outer end of the first bearing are respectively connected to the connecting rod and the locating ring; a convex ring is provided on the connecting rod; and the convex ring is configured to block the first bearing.

Further, each of an upper end and a lower end of the mounting sleeve is provided with a second mounting groove; a second bearing is provided on the second mounting groove; an inner end and an outer end of the second bearing are respectively connected to the connecting rod and the mounting sleeve; and an elastic member is provided between the second bearing and the inner grinding head.

In some embodiments of the present application, a polygonal hole is formed in the top cover; and a top end of the connecting rod cooperates with the polygonal hole and extends through the polygonal hole.

Further, a locating hole is formed under the polygonal hole; a part of the connecting rod cooperates with the locating hole and extends through the locating hole; a locating column is provided on the top cover; and the polygonal hole is formed on the locating column and allows the locating column to vertically penetrate.

Further, the top cover includes a bottom plug and a grip sleeve with an inner cavity; the bottom plug is provided at a bottom of the grip sleeve; the bottom plug is threadedly connected to the grip sleeve; the locating column is provided on the bottom plug; an outwardly protruding arcuate surface or hemispherical surface is provided on the bottom plug; and a blocking surface cooperating with the arcuate surface or hemispherical surface is provided on the adjusting ring.

In some embodiments of the present application, a locating seat and a fixing seat are provided at a bottom of the cartridge; the locating seat is fixedly connected to the cartridge; the fixing seat is threadedly connected to the cartridge; and a top surface of the outer grinding head is attached to the locating seat, and a bottom surface of the outer grinding head is attached to the fixing seat.

### DESCRIPTION OF THE DRAWINGS

FIG. 1 is a schematic structural view according to Embodiment 1 of the present utility model;
FIG. 2 is a sectional view according to Embodiment 1 of the present utility model;
FIG. 3 is a schematic structural view of a cartridge according to Embodiment 1 of the present utility model; and
FIG. 4 is a schematic structural view of a locating ring according to Embodiment 1 of the present utility model.

In the figures: 1: cartridge, 2: top cover, 3: mounting sleeve, 4: grinding assembly, 5: outer grinding head, 6: inner grinding head, 7: connecting rod, 8: first connecting plate, 9: adjusting ring, 10: positioning groove, 11: positioning piece, 12: locating ring, 13: second connecting plate, 14: first mounting groove, 15: first bearing, 16: convex ring, 17: second mounting groove, 18: second bearing, 19: elastic member, 20: polygonal hole, 21: locating hole, 22: locating column, 23: bottom plug, 24: grip sleeve, 25: locating seat, 26: fixing seat, 27: hemispherical surface, and 28: blocking surface.

### SPECIFIC IMPLEMENTATIONS

To further describe the technical means adopted by the present utility model to achieve the intended purpose of the present utility model and the effects of the technical means, the specific implementations, structures, features, and effects of the present utility model are described in detail below with reference to the drawings and preferred embodiments.

### Embodiment 1:

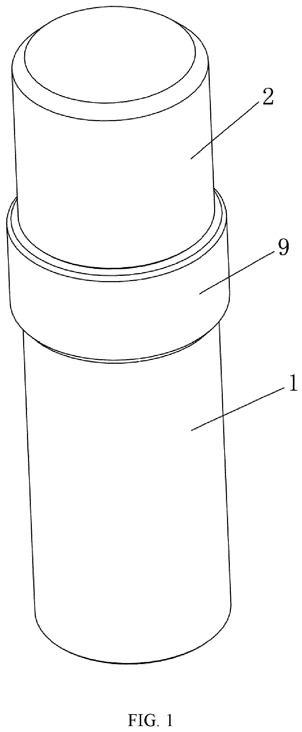

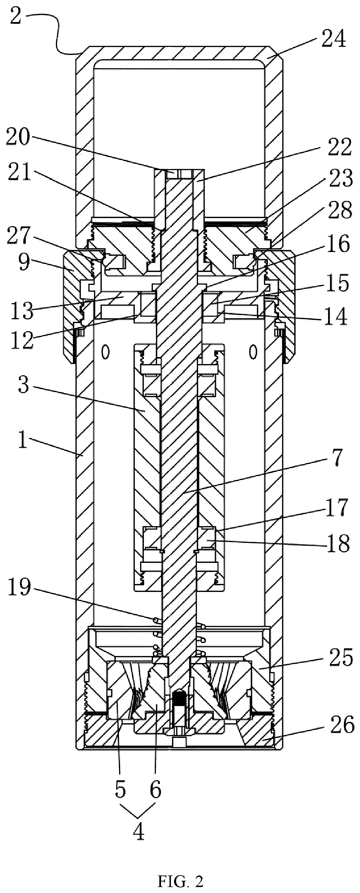

The embodiment provides a hand-held grinder. As shown in FIG. 1 and FIG. 2, the hand-held grinder includes cartridge 1 with an inner cavity. Top cover 2 is provided at a top of the cartridge 1. The top cover 2 can rotate relative to the cartridge 1. Mounting sleeve 3 and grinding assembly 4 are provided in the cartridge 1. The grinding assembly 4 includes outer grinding head 5 and inner grinding head 6. The outer grinding head 5 is fixedly connected to the cartridge 1. The inner grinding head 6 is connected to the top cover 2 through connecting rod 7. The connecting rod 7 extends through the mounting sleeve 3. At least one first connecting plate 8 is provided between the mounting sleeve 3 and the cartridge 1. Two ends of the first connecting plate 8 are respectively connected to an outer wall of the mounting sleeve 3 and an inner wall of the cartridge 1. In the embodiment, there are three first connecting plates 8. The top cover 2 is detachable, such that a material to be ground and crushed is put into the inner cavity of the cartridge 1 conveniently. The inner cavity of the cartridge 1 is configured to accommodate the material to be ground and crushed. The outer grinding head 5 is fixedly connected to the cartridge 1, the inner grinding head 6 is connected to the top cover 2 through the connecting rod 7, and the top cover 2 can rotate relative to the cartridge 1, such that when the top cover 2 is rotated, the top cover 2 drives the connecting rod 7 to rotate, thereby driving the inner grinding head 6 to rotate. The outer grinding head 5 and the inner grinding head 6 rotate relatively to grind and crush the material. Compared with the conventional grinder having a rotatable bottom, with the design of the rotatable top cover 2, the grinder is gripped more suitably to apply a force, and rotated more smoothly. The bottom of the grinder can be made large appropriately to expand an area for grinding and crushing.

In order to adjust grind fineness, adjusting ring 9 is provided between the cartridge 1 and the top cover 2. The adjusting ring 9 is sleeved on the cartridge 1. The adjusting ring 9 is threadedly connected to the cartridge 1. The adjusting ring 9 is configured to drive the connecting rod 7 to move up. With the design of the adjusting ring 9, a height difference between the outer grinding head 5 and the inner grinding head 6 can be adjusted by rotating the adjusting ring 9, thereby adjusting the grind fineness.

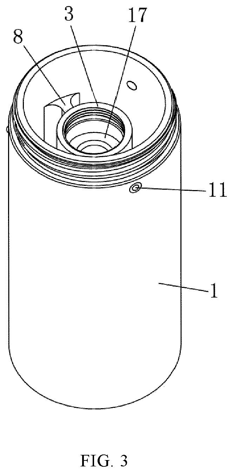

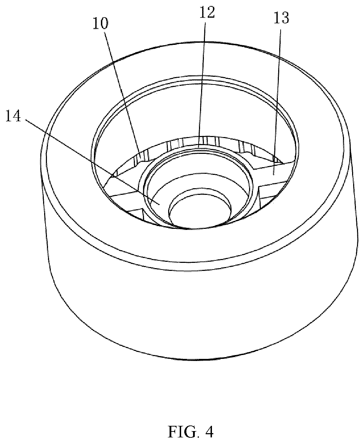

In order to adjust the grind fineness reliably, as shown in FIG. 3 and FIG. 4, positioning groove 10 is formed in an inner wall of the adjusting ring 9. The positioning groove 10 is arranged around a center of the adjusting ring 9 in an array. Positioning piece 11 cooperating with the positioning groove 10 is provided on an outer wall of the cartridge 1. In the embodiment, there are 24 positioning grooves 10, and three positioning pieces 11. The positioning piece 11 is a locating snap. With the cooperative design of the positioning groove 10 and the positioning piece 11, the adjusting ring 9 realizes gear adjustment on the grind fineness, and free rotation of the adjusting ring 9 can be prevented.

In order to mount the connecting rod 7 stably, locating ring 12 is provided at a center of the adjusting ring 9. At least one second connecting plate 13 is provided between the locating ring 12 and the cartridge 1. Two ends of the second connecting plate 13 are respectively connected to an outer wall of the locating ring 12 and an inner wall of the adjusting ring 9. The connecting rod 7 extends through the locating ring 12. The locating ring 12 can function to guide and fix the connecting rod 7, such that the connecting rod 7 rotates more stably.

In order to rotate the connecting rod 7 smoothly, first mounting groove 14 is formed in the locating ring 12. First bearing 15 is provided on the first mounting groove 14. An inner end and an outer end of the first bearing 15 are respectively connected to the connecting rod 7 and the locating ring 12. With the design of the first bearing 15, rotation between the connecting rod 7 and the locating ring 12 can be smoother.

In order to mount the connecting rod 7 reliably, convex ring 16 is provided on the connecting rod 7. The convex ring 16 is attached to a side of the first bearing 15 away from the locating ring 12 to block the first bearing 15. With the design of the convex ring 16, movement of the connecting rod 7 can be limited to prevent the connecting rod 7 from sliding down.

In order to allow the connecting rod 7 to rotate smoothly, each of an upper end and a lower end of the mounting sleeve 3 is provided with second mounting groove 17. Second bearing 18 is provided on the second mounting groove 17. An inner end and an outer end of the second bearing 18 are respectively connected to the connecting rod 7 and the mounting sleeve 3. Elastic member 19 is provided between the second bearing 18 and the inner grinding head 6. In the embodiment, the elastic member 19 is a spring. With the design of the second bearing 18, rotation between the connecting rod 7 and the mounting sleeve 3 is smoother. With the design of the elastic member 19, a downward pressure can be applied to the inner grinding head 6 to ensure reliable mounting of the inner grinding head 6.

In order that the top cover 2 drives the connecting rod 7 to rotate reliably, polygonal hole 20 is formed in the top cover 2. A top end of the connecting rod 7 cooperates with the polygonal hole 20 and extends through the polygonal hole 20. The polygonal hole 20 cooperates with the top end of the connecting rod 7, which can prevent the top end of the connecting rod 7 from slipping, and ensure that the top cover 2 drives the connecting rod 7 to rotate reliably.

In order to facilitate mounting of the connecting rod 7, locating hole 21 is formed under the polygonal hole 20. A part of the connecting rod 7 cooperates with the locating hole 21 and extends through the locating hole 21. Locating column 22 is provided on the top cover 2. The polygonal hole 20 is formed on the locating column 22 and allows the locating column 22 to vertically penetrate. With the design of the locating hole 21, a front end of the connecting rod 7 enters the locating hole 21 before entering the polygonal hole 20. This reduces a moving range of the front end of the connecting rod 7, and facilitates entry of the front end of the connecting rod 7 into the polygonal hole 20. The polygonal hole 20 penetrates through the locating column 22, which facilitates downward ejection of the connecting rod 7 from the polygonal hole 20 to take down the top cover 2.

In order to make the top cover 2 more practical, the top cover 2 includes bottom plug 23 and grip sleeve 24 with an inner cavity. The bottom plug 23 is provided at a bottom of the grip sleeve 24. The bottom plug 23 is threadedly connected to the grip sleeve 24. The locating column 22 is provided on the bottom plug 23. The inner cavity of the grip sleeve 24 may be configured to accommodate a ground product for later use. The bottom plug 23 is threadedly connected to the grip sleeve 24, such that the grip sleeve 24 can be detached conveniently.

In order to enhance connection, outwardly protruding arcuate surface or hemispherical surface 27 is provided on the bottom plug 23. Blocking surface 28 cooperating with the arcuate surface or hemispherical surface 27 is provided on the adjusting ring 9. In the embodiment, the hemispherical surface 27 is provided on the bottom plug 23. The hemispherical surface 27 is formed by a telescopic marble on the bottom plug 23, with a telescoping power provided by a spring. After the bottom plug 23 is mounted, the hemispherical surface 27 is attached to the blocking surface 28, and the blocking surface 28 prevents disengagement of the hemispherical surface 27. In the absence of a force, the bottom plug 23 cannot be disengaged. The bottom plug 23 is pulled forcibly when detached. The hemispherical surface 27 and the adjusting ring 9 deform or the hemispherical surface 27 is stressed to retract inward, such that the bottom plug 23 can be disengaged smoothly.

In order to achieve a reliable grinding gear, locating seat 25 and fixing seat 26 are provided at a bottom of the cartridge 1. The locating seat 25 is fixedly connected to the cartridge 1. The fixing seat 26 is threadedly connected to the cartridge 1. The top surface of the outer grinding head 5 is attached to the locating seat 25, and the bottom surface of the outer grinding head 5 is attached to the fixing seat 26. In the embodiment, the cartridge 1 is sleeved on the locating seat 25 and the fixing seat 26. The locating seat 25 is sleeved on the outer grinding head 5. The locating seat 25 is threadedly connected to the inner wall of the cartridge 1, and fixed by a glue, so as to prevent movement of the locating seat 25. Certainly, the locating seat 25 and the cartridge 1 may also be an integrated structure. For the conventional grinder, after the grinding assembly 4 is detached and cleaned, relative positions of the outer grinding head 5 and the inner grinding head 6 has changed, and the grinding gear is to be readjusted, thereby causing inconvenience in use. With the design of the locating seat 25, the mounting position of the outer grinding head 5 is fixed. The fixing seat 26 is configured to press the outer grinding head 5. A height of the inner grinding head 6 is controlled by the connecting rod 7. The detachment of the inner grinding head 6 does not change the position of the connecting rod 7. After the inner grinding head 6 is remounted, its position does not change. This ensures that the grinding gear does not change, and does not need to be readjusted.

### Embodiment 2 (Not constituting a part of the invention):

The embodiment provides a hand-held grinder. As shown in FIG. 1 and FIG. 2, the hand-held grinder includes cartridge 1 with an inner cavity. Mounting sleeve 3 and grinding assembly 4 are provided in the cartridge 1. The grinding assembly 4 includes outer grinding head 5 and inner grinding head 6. The outer grinding head 5 is fixedly connected to the cartridge 1. Connecting rod 7 extends through the mounting sleeve 3. At least one first connecting plate 8 is provided between the mounting sleeve 3 and the cartridge 1. Two ends of the first connecting plate 8 are respectively connected to an outer wall of the mounting sleeve 3 and an inner wall of the cartridge 1. The connecting rod 7 is connected to the inner grinding head 6. Locating seat 25 and fixing seat 26 are provided at a bottom of the cartridge 1. The locating seat 25 is fixedly connected to the cartridge 1. The fixing seat 26 is threadedly connected to the cartridge 1. The top surface of the outer grinding head 5 is attached to the locating seat 25, and the bottom surface of the outer grinding head 5 is attached to the fixing seat 26. In the embodiment, the cartridge 1 is sleeved on the locating seat 25 and the fixing seat 26. The locating seat 25 is sleeved on the outer grinding head 5. The locating seat 25 is threadedly connected to the inner wall of the cartridge 1, and fixed by a glue, so as to prevent movement of the locating seat 25. Certainly, the locating seat 25 and the cartridge 1 may also be an integrated structure. For the conventional grinder, after the grinding assembly 4 is detached and cleaned, relative positions of the outer grinding head 5 and the inner grinding head 6 has changed, and the grinding gear is to be readjusted, thereby causing inconvenience in use. With the design of the locating seat 25, the mounting position of the outer grinding head 5 is fixed. The fixing seat 26 is configured to press the outer grinding head 5. A height of the inner grinding head 6 is controlled by the connecting rod 7. The detachment of the inner grinding head 6 does not change the position of the connecting rod 7. After the inner grinding head 6 is remounted, its position does not change. This ensures that the grinding gear does not change, and does not need to be readjusted.

Other technical features are the same as those of Embodiment 1.

## Claims

1. A hand-held grinder, comprising a cartridge (1) with an inner cavity, wherein an adjusting ring (9) is provided on the cartridge (1); the adjusting ring (9) is sleeved on the cartridge (1); a mounting sleeve (3) and a grinding assembly (4) are provided in the cartridge (1); the grinding assembly (4) comprises an outer grinding head (5) and an inner grinding head (6); the outer grinding head (5) is fixedly connected to the cartridge (1); a connecting rod (7) extends through the mounting sleeve (3); at least one first connecting plate (8) is provided between the mounting sleeve (3) and the cartridge (1); two ends of the first connecting plate (8) are respectively connected to an outer wall of the mounting sleeve (3) and an inner wall of the cartridge (1); the connecting rod (7) is connected to the inner grinding head (6); and the adjusting ring (9) is configured to drive the connecting rod (7) to move up, thereby adjusting a height difference between the outer grinding head (5) and the inner grinding head (6);
**characterized in that**
the adjusting ring (9) is threadedly connected to the cartridge (1).

2. The hand-held grinder according to claim 1, **characterized in that** a top cover (2) is provided at a top of the cartridge (1); the top cover (2) is configured to rotate relative to the cartridge (1); the adjusting ring (9) is located between the cartridge (1) and the top cover (2); the inner grinding head (6) is connected to the top cover (2) through the connecting rod (7); a locating seat (25) and a fixing seat (26) are provided at a bottom of the cartridge (1); the locating seat (25) is fixedly connected to the cartridge (1); the fixing seat (26) is threadedly connected to the cartridge (1); and a top surface of the outer grinding head (5) is attached to the locating seat (25), and a bottom surface of the outer grinding head (5) is attached to the fixing seat (26).

3. The hand-held grinder according to claim 1, **characterized in that** a positioning groove (10) is formed in an inner wall of the adjusting ring (9); the positioning groove (10) is arranged around a center of the adjusting ring (9) in an array; and a positioning piece (11) cooperating with the positioning groove (10) is provided on an outer wall of the cartridge (1).

4. The hand-held grinder according to claim 1, **characterized in that** a locating ring (12) is provided at a center of the adjusting ring (9); at least one second connecting plate (13) is provided between the locating ring (12) and the cartridge (1); two ends of the second connecting plate (13) are respectively connected to an outer wall of the locating ring (12) and an inner wall of the adjusting ring (9); and the connecting rod (7) extends through the locating ring (12).

5. The hand-held grinder according to claim 4, **characterized in that** a first mounting groove (14) is formed in the locating ring (12); a first bearing (15) is provided on the first mounting groove (14); an inner end and an outer end of the first bearing (15) are respectively connected to the connecting rod (7) and the locating ring (12); a convex ring (16) is provided on the connecting rod (7); and the convex ring (16) is configured to block the first bearing (15).

6. The hand-held grinder according to claim 5, **characterized in that** each of an upper end and a lower end of the mounting sleeve (3) is provided with a second mounting groove (17); a second bearing (18) is provided on the second mounting groove (17); an inner end and an outer end of the second bearing (18) are respectively connected to the connecting rod (7) and the mounting sleeve (3); and an elastic member (19) is provided between the second bearing (18) and the inner grinding head (6).

7. The hand-held grinder according to claim 2, **characterized in that** a polygonal hole (20) is formed in the top cover (2); and a top end of the connecting rod (7) cooperates with the polygonal hole (20) and extends through the polygonal hole (20).

8. The hand-held grinder according to claim 7, **characterized in that** a locating hole (21) is formed under the polygonal hole (20); a part of the connecting rod (7) cooperates with the locating hole (21) and extends through the locating hole (21); a locating column (22) is provided on the top cover (2); and the polygonal hole (20) is formed on the locating column (22) and allows the locating column (22) to vertically penetrate.

9. The hand-held grinder according to claim 8, **characterized in that** the top cover (2) comprises a bottom plug (23) and a grip sleeve (24) with an inner cavity; the bottom plug (23) is provided at a bottom of the grip sleeve (24); the bottom plug (23) is threadedly connected to the grip sleeve (24); the locating column (22) is provided on the bottom plug (23); an outwardly protruding arcuate surface or hemispherical surface (27) is provided on the bottom plug (23); and a blocking surface (28) cooperating with the arcuate surface or hemispherical surface (27) is provided on the adjusting ring (9).

## Patentansprüche

1. Handgehaltener Grinder, umfassend eine Kartusche (1) mit einem inneren Hohlraum, wobei ein Einstellring (9) an der Kartusche (1) vorgesehen ist; der Einstellring (9) auf der Kartusche (1) aufgeschoben ist; eine Montierhülse (3) und eine Schleifbaugruppe (4) sind in der Kartusche (1) vorgesehen; die Schleifbaugruppe (4) umfasst einen äußeren Schleifkopf (5) und einen inneren Schleifkopf (6); der äußere Schleifkopf (5) ist fest mit der Kartusche (1) verbunden; eine Verbindungsstange (7) erstreckt sich durch die Montierhülse (3); mindestens eine erste Verbindungsplatte (8) ist zwischen der Montierhülse (3) und der Kartusche (1) vorgesehen; zwei Enden der ersten Verbindungsplatte (8) sind jeweils mit einer Außenwand der Montierhülse (3) und einer Innenwand der Kartusche (1) verbunden; die Verbindungsstange (7) ist mit dem inneren Schleifkopf (6) verbunden; und der Einstellring (9) ist dazu konfiguriert, die Verbindungsstange (7) nach oben zu bewegen und dadurch einen Höhenunterschied zwischen dem äußeren Schleifkopf (5) und dem inneren Schleifkopf (6) einzustellen;
**dadurch gekennzeichnet, dass**
der Einstellring (9) mit der Kartusche (1) verschraubt ist.

2. Handgehaltener Grinder nach Anspruch 1, **dadurch gekennzeichnet, dass** eine Abdeckung (2) an einem oberen Ende der Kartusche (1) vorgesehen ist; die Abdeckung (2) ist dazu konfiguriert, relativ zur Kartusche (1) zu rotieren; der Einstellring (9) ist zwischen der Kartusche (1) und der Abdeckung (2) angeordnet; der innere Schleifkopf (6) ist über die Verbindungsstange (7) mit der Abdeckung (2) verbunden; ein Positioniersitz (25) und ein Befestigungssitz (26) sind an einem unteren Ende der Kartusche (1) vorgesehen; der Positioniersitz (25) ist fest mit der Kartusche (1) verbunden; der Befestigungssitz (26) ist mit der Kartusche (1) verschraubt; und eine Oberseite des äußeren Schleifkopfes (5) liegt am Positioniersitz (25) an, und eine Unterseite des äußeren Schleifkopfes (5) liegt am Befestigungssitz (26) an.

3. Handgehaltener Grinder nach Anspruch 1, **dadurch gekennzeichnet, dass** eine Positionierungsnut (10) in einer Innenwand des Einstellrings (9) ausgebildet ist; die Positionierungsnut (10) ist um ein Zentrum des Einstellrings (9) Kreisförmig angeordnet; und ein Positionierungsteil (11), das mit der Positionierungsnut (10) zusammenwirkt, ist an einer Außenwand der Kartusche (1) vorgesehen.

4. Handgehaltener Grinder nach Anspruch 1, **dadurch gekennzeichnet, dass** ein Positionierring (12) im Zentrum des Einstellrings (9) vorgesehen ist; mindestens eine zweite Verbindungsplatte (13) ist zwischen dem Positionierring (12) und der Kartusche (1) vorgesehen; zwei Enden der zweiten Verbindungsplatte (13) sind jeweils mit einer Außenwand des Positionierrings (12) und einer Innenwand des Einstellrings (9) verbunden; und die Verbindungsstange (7) erstreckt sich durch den Positionierring (12).

5. Handgehaltener Grinder nach Anspruch 4, **dadurch gekennzeichnet, dass** eine erste Montiernute (14) im Positionierring (12) ausgebildet ist; ein erstes Lager (15) ist an der ersten Montiernute (14) vorgesehen; ein inneres Ende und ein äußeres Ende des ersten Lagers (15) sind jeweils mit der Verbindungsstange (7) und dem Positionierring (12) verbunden; ein Vorsprungring (16) ist an der Verbindungsstange (7) vorgesehen; und der Vorsprungring (16) ist dazu konfiguriert, das erste Lager (15) zu blockieren.

6. Handgehaltener Grinder nach Anspruch 5, **dadurch gekennzeichnet, dass** jeweils ein oberes Ende und ein unteres Ende der Montierhülse (3) mit einer zweiten Montiernute (17) versehen sind; ein zweites Lager (18) ist an der zweiten Montiernute (17) vorgesehen; ein inneres Ende und ein äußeres Ende des zweiten Lagers (18) sind jeweils mit der Verbindungsstange (7) und der Montierhülse (3) verbunden; und ein elastisches Element (19) ist zwischen dem zweiten Lager (18) und dem inneren Schleifkopf (6) vorgesehen.

7. Handgehaltener Grinder nach Anspruch 2, **dadurch gekennzeichnet, dass** ein polygonales Loch (20) in der Abdeckung (2) ausgebildet ist; und ein oberes Ende der Verbindungsstange (7) mit dem polygonalen Loch (20) zusammenwirkt und sich durch das polygonale Loch (20) erstreckt.

8. Handgehaltener Grinder nach Anspruch 7, **dadurch gekennzeichnet, dass** eine Positionieröffnung (21) unter dem polygonalen Loch (20) ausgebildet ist; ein Teil der Verbindungsstange (7) mit der Positionieröffnung (21) zusammenwirkt und sich durch die Positionieröffnung (21) erstreckt; eine Positioniersäule (22) ist an der Abdeckung (2) vorgesehen; und das polygonale Loch (20) ist an der Positioniersäule (22) ausgebildet und ermöglicht der Positioniersäule (22), vertikal hindurchzutreten.

9. Handgehaltener Grinder nach Anspruch 8, **dadurch gekennzeichnet, dass** die Abdeckung (2) einen Bodenstopfen (23) und eine Griffhülse (24) mit einem inneren Hohlraum umfasst; der Bodenstopfen (23) ist an einem unteren Ende der Griffhülse (24) vorgesehen; der Bodenstopfen (23) ist mit der Griffhülse (24) verschraubt; die Positioniersäule (22) ist am Bodenstopfen (23) vorgesehen; eine nach außen vorspringende bogenförmige Oberfläche oder halbkugelförmige Oberfläche (27) ist am Bodenstopfen (23) vorgesehen; und eine Blockieroberfläche (28), die mit der bogenförmigen Oberfläche oder halbkugelförmigen Oberfläche (27) zusammenwirkt, ist am Einstellring (9) vorgesehen.

## Revendications

1. Meuleuse portative, comprenant une cartouche (1) avec une cavité interne, dans laquelle une bague de réglage (9) est ménagée sur la cartouche (1) ; la bague de réglage (9) est emmanchée sur la cartouche (1) ; un manchon de montage (3) et un ensemble de meulage (4) sont ménagés dans la cartouche (1) ; l'ensemble de meulage (4) comprend une tête de meulage externe (5) et une tête de meulage interne (6) ; la tête de meulage externe (5) est reliée de manière fixe à la cartouche (1) ; une tige de liaison (7) s'étend à travers le manchon de montage (3) ; au moins une première plaque de liaison (8) est ménagée entre le manchon de montage (3) et la cartouche (1) ; deux extrémités de la première plaque de liaison (8) sont respectivement reliées à une paroi externe du manchon de montage (3) et à une paroi interne de la cartouche (1) ; la tige de liaison (7) est reliée à la tête de meulage interne (6) ; et la bague de réglage (9) est configurée pour entraîner la tige de liaison (7) à se déplacer vers le haut, ajustant ainsi une différence de hauteur entre la tête de meulage externe (5) et la tête de meulage interne (6) ;
**caractérisée en ce que**
la bague de réglage (9) est reliée par filetage à la cartouche (1).

2. Meuleuse portative selon la revendication 1, **caractérisée en ce qu'**un couvercle supérieur (2) est ménagée sur le dessus de la cartouche (1) ; le couvercle supérieur (2) est configuré pour tourner par rapport à la cartouche (1) ; la bague de réglage (9) est située entre la cartouche (1) et le couvercle supérieur (2) ; la tête de meulage interne (6) est reliée au couvercle supérieur (2) à travers la tige de liaison (7) ; un siège de positionnement (25) et un siège de fixation (26) sont ménagés au fond de la cartouche (1) ; le siège de positionnement (25) est relié de manière fixe à la cartouche (1) ; le siège de fixation (26) est relié par filetage à la cartouche (1) ; et une surface supérieure de la tête de meulage externe (5) est attachée au siège de positionnement (25), et une surface inférieure de la tête de meulage externe (5) est attachée au siège de fixation (26).

3. Meuleuse portative selon la revendication 1, **caractérisée en ce qu'**une rainure de positionnement (10) est formée dans une paroi interne de la bague de réglage (9) ; la rainure de positionnement (10) est ménagée autour d'un centre de la bague de réglage (9) selon un réseau ; et une pièce de positionnement (11) coopérant avec la rainure de positionnement (10) est ménagée sur une paroi externe de la cartouche (1).

4. Meuleuse portative selon la revendication 1, **caractérisée en ce qu'**une bague de positionnement (12) est ménagée au centre de la bague de réglage (9) ; au moins une deuxième plaque de liaison (13) est ménagée entre la bague de positionnement (12) et la cartouche (1) ; deux extrémités de la deuxième plaque de liaison (13) sont respectivement reliées à une paroi externe de la bague de positionnement (12) et à une paroi interne de la bague de réglage (9) ; et la tige de liaison (7) s'étend à travers la bague de positionnement (12).

5. Meuleuse portative selon la revendication 4, **caractérisée en ce qu'**une première rainure de montage (14) est formée dans la bague de positionnement (12) ; un premier palier (15) est ménagé sur la première rainure de montage (14) ; une extrémité interne et une extrémité externe du premier palier (15) sont respectivement reliées à la tige de liaison (7) et à la bague de positionnement (12) ; une bague convexe (16) est ménagée sur la tige de liaison (7) ; et la bague convexe (16) est configurée pour bloquer le premier palier (15).

6. Meuleuse portative selon la revendication 5, **caractérisée en ce que** chacune d'une extrémité supérieure et d'une extrémité inférieure du manchon de montage (3) est pourvue d'une deuxième rainure de montage (17) ; un deuxième palier (18) est ménagé sur la deuxième rainure de montage (17) ; une extrémité interne et une extrémité externe du deuxième palier (18) sont respectivement reliées à la tige de liaison (7) et au manchon de montage (3) ; et un organe élastique (19) est ménagé entre le deuxième palier (18) et la tête de meulage interne (6).

7. Meuleuse portative selon la revendication 2, **caractérisée en ce qu'**un trou polygonal (20) est formé dans le couvercle supérieur (2) ; et une extrémité supérieure de la tige de liaison (7) coopère avec le trou polygonal (20) et s'étend à travers le trou polygonal (20).

8. Meuleuse portative selon la revendication 7, **caractérisée en ce qu'**un trou de positionnement (21) est formé sous le trou polygonal (20) ; une partie de la tige de liaison (7) coopère avec le trou de positionnement (21) et s'étend à travers le trou de positionnement (21) ; une colonne de positionnement (22) est ménagée sur le couvercle supérieur (2) ; et le trou polygonal (20) est formé sur la colonne de positionnement (22) et permet à la colonne de positionnement (22) de pénétrer verticalement.

9. Meuleuse portative selon la revendication 8, **caractérisée en ce que** le couvercle supérieur (2) comprend un bouchon inférieur (23) et un manchon de préhension (24) avec une cavité interne ; le bouchon inférieur (23) est ménagé au fond du manchon de préhension (24) ; le bouchon inférieur (23) est relié par filetage au manchon de préhension (24) ; la colonne de positionnement (22) est ménagée sur le bouchon inférieur (23) ; une surface arquée ou une surface hémisphérique faisant saillie vers l'extérieur (27) est ménagée sur le bouchon inférieur (23) ; et une surface de blocage (28) coopérant avec la surface arquée ou la surface hémisphérique (27) est ménagée sur la bague de réglage (9).
